# EUROPEAN PATENT SPECIFICATION

(11) **EP 4 050 162 B1**
(45) Date of publication and mention of the grant of the patent: **15.11.2023**
(21) Application number: 20900452.2
(22) Date of filing: 20.07.2020
(51) Int. Cl.: E02F 9/20, E02F 9/26, E02F 3/43

(54) **REMOTE OPERATION ASSISTANCE SYSTEM FOR WORK MACHINE**
FERNBEDIENUNGSASSISTENZSYSTEM FÜR ARBEITSMASCHINE
SYSTÈME D'AIDE À L'ACTIONNEMENT À DISTANCE POUR ENGIN DE CHANTIER

(30) Priority: 10.12.2019 JP 2019223255
(43) Date of publication of application: 31.08.2022
(73) Proprietor: KOBELCO CONSTRUCTION MACHINERY CO., LTD., Hiroshima-shi Hiroshima 731-5161 (JP)
(72) Inventor: HIROSE Ryuichi, Hiroshima-shi, Hiroshima 731-5161 (JP); SASAKI Hitoshi, Hiroshima-shi, Hiroshima 731-5161 (JP); SAIKI Seiji, Hiroshima-shi, Hiroshima 731-5161 (JP); YAMAZAKI Yoichiro, Hiroshima-shi, Hiroshima 731-5161 (JP)
(74) Representative: Schön, Christoph
(86) International application number: PCT/JP2020/028110
(87) International publication number: WO 2021/117285

(56) References cited:
- EP-A1- 2 631 374
- EP-A1- 3 385 458
- EP-A1- 3 414 982
- EP-A1- 3 495 570
- EP-B1- 3 446 189
- WO-A1-2019/111859
- WO-A1-2019/181874
- JP-A- H1 072 851
- JP-A- 2015 226 094
- JP-A- 2017 080 845
- JP-A- 2017 080 845
- JP-A- 2018 202 531
- KR-A- 20190 108 530

## Description

### Technical Field

The present invention relates to a remote operation assistance system that supports the remote operation of a work machine.

### Background Art

An invading moving body detection device has been disclosed that detects invasion of an invading moving body within a predetermined range such as a work area of a construction machine that is remotely operated (e.g., refer to Patent Literature 1). Another such detection device is known from Patent Literature 2, which not only gives a warning in an invasion occurrence, but further decelerates or stops the operation.

### Citation List

### Patent Literature

Patent Literature 1: Japanese Patent Application Laid-Open No. 10-72851
Patent Literature 2: WO 2019/181874 A1

### Summary of Invention

### Technical Problem

In Patent Literature 1, an invading moving body detection device has been disclosed that detects invasion of a moving body M within a predetermined range such as a work area of a construction machine that is remotely operated.

In some cases, a third party may interfere with an operator who is remotely operating a work machine. When the third party interferes with the operator, the operator is required to interrupt the operation.

Therefore, it is an object of the present invention to provide a remote operation assistance system used for assisting an operator to remotely operate a work machine.

### Solution to Problem

The present invention relates to a remote operation assistance system that is used for assisting the remote operation of a work machine by an operator using a remote operation device.

The present invention includes: a distance acquisition unit that is arranged at a predetermined portion of the remote operation device and obtains information on a distance to a moving body; an attribute acquisition unit that obtains an attribute to which the moving body belongs: an interference determination unit that determines a level of the likelihood of interference occurring with the remote operation, based on the information on the distance that is obtained by the distance acquisition unit and the attribute obtained by the attribute acquisition unit; and an assistance control unit that performs control to assist the remote operation according to a result of the determination by the assistance determination unit.

The remote operation assistance system according to the present invention is used to assist an operator who remotely operates a work machine. According to the present invention, the interference determination unit determines a level of the likelihood of interference occurring with the remote operation, based on the information on the distance detected by the distance acquisition unit and the attribute obtained by the attribute acquisition unit. Then, the assistance control unit performs control according to the determination result, thereby allowing the operator to be assisted in remotely operating the work machine.

### Brief Description of Drawings

FIG. 1 is a block diagram of a remote operation assistance system as one embodiment of the present invention.
FIG. 2 is a diagram of a remote control device as one embodiment of the present invention.
FIG. 3 is a diagram of a work machine as one embodiment of the present invention.
FIG. 4 is a flowchart of the remote operation assistance system as one embodiment of the present invention.
FIG. 5 is a block diagram of the remote operation assistance system as another embodiment of the present invention.

### Description of Embodiments

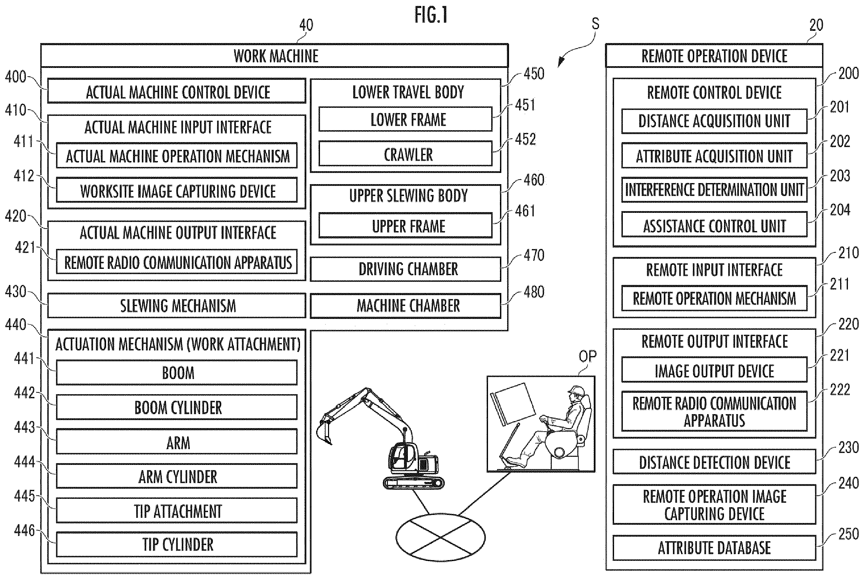

A remote operation assistance system S as one embodiment of the present invention, which is illustrated in FIG. 1, at least comprises a remote operation device 20 and a remote control device 200 that is comprised in the remote operation device 20. Details of the remote operation device 20 and the remote control device 200 will be described hereinafter.

Alternatively, the remote control device 200 may be comprised in a server 30 on a cloud. Details of the server 30 will be described hereinafter. In addition, the remote operation assistance system S may be a concept that includes a work machine 40 that is remotely operated by the remote operation device 20.

Here, the remote operation is a concept that an operator OP operates the work machine at a location away from the work machine 40 without riding on the work machine 40. In this invention, the operator OP can operate the work machine 40 at a location away from the work machine 40 by using the remote operation device 20.

The remote operation device 20 comprises the remote control device 200, a remote input interface 210, a remote output interface 220, a distance detection device 230, a remote operation image capturing device 240, and an attribute database 250.

The remote control device 200 comprises a distance acquisition unit 201, an attribute acquisition unit 202, an interference determination unit 203, and an assistance control unit 204. The remote control device 200 is constituted by an arithmetic processing device (a single-core processor or a multi-core processor; or a processor core included therein); and reads necessary data and software from a storage device such as a memory and executes arithmetic processing for the data according to the software.

The distance acquisition unit 201 obtains information on a distance from the operator OP to a moving body M that is present around the operator OP. The distance from the operator OP to the moving body M is detected by the distance detection device 230. Details of the distance detection device 230 will be described hereinafter.

The attribute acquisition unit 202 obtains an attribute to which the moving body M belongs from the attribute database 250. For example, the attribute acquisition unit 202 performs, by using a known technique, image analysis of a captured image that is obtained by image capture by the remote operation image capturing device 240, thereby being able to recognize the size and shape of the moving body M that are contained in the captured image. Then, the attribute acquisition unit 202 extracts a moving body M candidate having an attribute (e.g., shape) that is most similar to the moving body M, from among moving body candidates M that are stored beforehand in the attribute database 250. In addition, the attribute acquisition unit 202 refers to an attribute that the extracted moving body M candidate has, and obtains an attribute to which the moving body M belongs. Details of the remote operation image capturing device 240 and the attribute database 250 will be described hereinafter.

The attribute is a concept that includes at least information on the activity level of a moving body M. In addition, the concept of the attribute may include the type, name, age, and gender of a moving body M and information indicating the characteristics of the moving body M. Information on the activity level of a moving body M includes: information indicating that since the moving body M is an animal, the activity level is high; information indicating that since the moving body M is a human, the activity level is lower than that of an animal; information indicating that since the moving body M is a child, the activity level is higher than that of an adult; and information indicating that since the moving body M is an animal and there are a plurality of the moving bodies, the activity level is higher than a case where the moving body M is present alone. The attribute also may include image data of the moving body M. An example of it is image data of a face photo of the moving body M.

In addition, information on the activity level of a moving body M includes information on the personality of the moving body M. An example thereof is information indicating that since the moving body M has a mischievous personality, the activity level is high and there is a high likelihood of playing tricks on the operator OP and causing interference with the remote operation of the work machine 40. This example is merely one example and the information may be information indicating that since the moving body M is on bad terms with the operator OP, the activity level in a relationship with the operator is high and there is a high likelihood of hindering the remote operation performed by the operator OP and causing interference with the remote operation, or may be information indicating that since the moving body M has a quiet personality, the activity level is low and it does not hinder the remote operation performed by the operator OP and so, there is a low likelihood of causing interference with the remote operation of the work machine.

Information indicating the characteristics of a moving body M may also be such information as indicating that since the moving body M is a dog, whether it pounces on the operator is unpredictable and so, there is a high likelihood of causing interference with the remote operation of the work machine 40.

The interference determination unit 203 refers to a table stored in the attribute database 250 based on both the information on a distance from the operator OP to the moving body M, which is obtained by the distance acquisition unit 201 and the information on an attribute of the moving body M, which is obtained by the attribute acquisition unit 202; and determines a level of the likelihood that the moving body M will interfere with the remote operation performed by the operator OP.

In addition, another example of determination made by the interference determination unit 203 is that determination is made based on time-series information of a moving body M.

For example, in this case, time information on a predetermined time and position information on the position of the moving body at the time are obtained and when the moving body is approaching the operator OP, the interference determination unit 203 determines that there is a high likelihood that the moving body M will interfere with the remote operation performed by the operator OP.

On the other hand, time information on a predetermined time and position information on the position of the moving body at the time are obtained and when the moving body is moving away from the operator OP, the interference determination unit 203 determines that there is a low likelihood that the moving body M will interfere with the remote operation performed by the operator OP.

Alternatively, the interference determination unit 203 may make the determination by calculating a level of the likelihood that the moving body M will interfere with the remote operation performed by the operator OP by using a function stored in the attribute database 250, based on both the information on a distance from the operator OP to the moving body M, which is obtained by the distance acquisition unit 201 and the information on an attribute of the moving body M, which is obtained by the attribute acquisition unit 202. The function used in this case is a function that uses X as a master variable and Y as a dependent variable and outputs Y based on an input value of X. This function is merely one example of the function for determination.

The table and the like are stored in the attribute database 250 described hereinafter.

For example, as a distance from the operator OP to the moving body M is shorter, the interference determination unit 203 determines that there is a higher likelihood that the moving body M will interfere with the remote operation performed by the operator OP.

On the other hand, as a distance from the operator OP to the moving body M is longer, the interference determination unit 203 determines that there is a lower likelihood that the moving body M will interfere with the remote operation performed by the operator OP.

In addition, for example, as a speed at which the moving body M is approaching the operator OP is higher, the interference determination unit 203 determines that there is a higher likelihood that the moving body M will interfere with the remote operation performed by the operator OP.

Furthermore, for example, as a speed at which the moving body M is approaching the operator OP is lower, the interference determination unit 203 determines that there is a lower likelihood that the moving body M will interfere with the remote operation performed by the operator OP. Also, as the moving body M is moving away from the operator OP more, the interference determination unit 203 determines that there is a lower likelihood that the moving body M will interfere with the remote operation performed by the operator OP.

Furthermore, for example, as the activity level of the moving body M is higher, the interference determination unit 203 determines that there is a higher likelihood that the moving body M will interfere with the remote operation performed by the operator OP.

On the other hand, as the activity level of the moving body M is lower, the interference determination unit 203 determines that there is a lower likelihood that the moving body M will interfere with the remote operation performed by the operator OP.

More specifically, 10 is set as a danger threshold for determining that there is a high likelihood that the moving body M will interfere with the remote operation performed by the operator; and when a danger index value is 10 or greater, the interference determination unit 203 determines that there is a high likelihood that the moving body M will interfere with the remote operation performed by the operator OP. The danger threshold is predetermined by using a table or function.

Here, a case where a pet (dog) of the operator is 1 meter behind the operator is described. In this case, a distance from the operator OP to the moving body M, which is obtained by the distance acquisition unit 201, is 1 meter and therefore, the danger index value is determined to be 5 by reference to a predetermined table. In addition, the moving body M obtained by the attribute acquisition unit 202 is a pet dog and the activity level is higher than that of a human and therefore, the danger index value is determined to be 5 by reference to a predetermined table. The danger index value is predetermined by using a table or function.

Then, the total danger index value is 10, reaching the danger threshold of 10; and the interference determination unit 203 determines that there is a high likelihood that the dog will interfere with the remote operation performed by the operator OP.

In turn, a case where an instructor who instructs the operator in operation is 1 meter behind the operator is described. In this case, a distance from the operator OP to the moving body M, which is obtained by the distance acquisition unit 201, is 1 meter and therefore, the danger index value is determined to be 5 by reference to a predetermined table. In addition, the moving body M obtained by the attribute acquisition unit 202 is an instructor for the operator OP and the activity level is low and therefore, the danger index value is determined to be 0 by reference to a predetermined table.

Then, the total danger index value is only 5 and therefore, the interference determination unit 203 determines that there is a low likelihood that the instructor will interfere with the remote operation performed by the operator OP.

As another example of the determination by the interference determination unit 203, the following example is provided. For example, in a case where the moving body M is a suspicious person whose attribute is not stored in advance in the attribute database 250 and the attribute acquisition unit 202 cannot obtain an attribute to which the moving body M belongs by reference to a table stored in the attribute database 250, the danger index value of the moving body M (suspicious person) is determined to be 10. The attribute database 250 will be described hereinafter.

Then, the danger index value is 10 irrespective of a distance from the operator OP to the moving body M (suspicious person), reaching the danger threshold of 10; and therefore, the interference determination unit 203 determines that there is a high likelihood that the moving body M (suspicious person) will interfere with the remote operation performed by the operator OP.

The remote input interface 210 comprises a remote operation mechanism 211 described hereinafter.

The remote operation mechanism 211 includes a travel operation device, a slewing operation device, a boom operation device, an arm operation device, and a packet operation device. Each operation device has an operation lever that receives a pivot operation. The operation lever (travel lever) of the travel operation device is operated to move a lower travel body 450 of the work machine 40. The travel lever may also be used as a travel pedal. For example, a travel pedal that is fixed on a base portion or a lower end portion of the travel lever may be provided. An operation lever (slewing lever) of the slewing operation device is operated to drive a hydraulic slewing motor that constitutes a slewing mechanism 430 of the work machine 40. An operation lever (boom lever) of the boom operation device is operated to drive a boom cylinder 442 of the work machine 40.

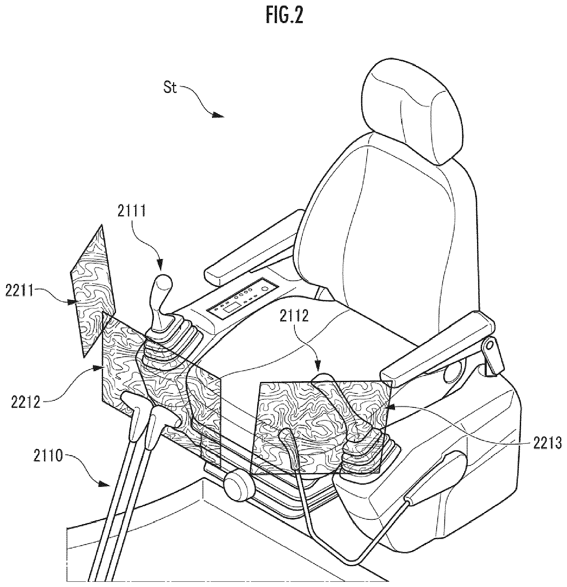

The operation levers constituting the remote operation mechanism 211 are arranged, for example, around a seat St for the operator to sit on, as illustrated in Fig. 2. A pair of left and right travel levers 2110 corresponding to left and right crawlers are arranged in front of the seat St side by side. A right-side operation lever 2111 functions as a boom lever when being operated in the front-back direction and also functions as a bucket lever when being operated in the left-right direction. A left-side operation lever 2112 functions as a slewing lever when being operated in the front-back direction. Lever patterns may be freely changed according to an operation instruction by the operator.

The assistance control unit 204 is constituted by a computer unit comprising a CPU, a RAM, a ROM, and a flash memory; or the like.

In the ROM of the assistance control unit 204, a program for making the computer unit function as the assistance control unit 204 is stored. That is, the CPU executes the program stored in the ROM to thereby cause the computer unit to function as the assistance control unit 204.

For example, the assistance control unit 204 has a function for controlling the motion of the work machine 40 according to a result of the determination by the interference determination unit 203. More specifically, when the interference determination unit 203 determines that there is a high likelihood of causing interference with the remote operation performed by the operator (e.g., when the danger index value is 10 or greater), the assistance control unit 204 controls the torque, operation levers, brake, and the like of the work machine 40 to perform a stop, a deceleration, or the like of the motion of the work machine 40.

When determining that there is a high likelihood of causing interference with the remote operation performed by the operator, the assistance control unit 204, for example, stops transmitting, to the work machine 40, the operation amounts of the travel operation device, slew operation device, boom operation device, arm operation device, bucket operation device, and the like, which are input to the remote operation mechanism 211 by operation of the operator OP; and also automatically stops an actuator that is running in the work machine 40.

When determining that there is a low likelihood of causing interference with the remote operation performed by the operator, the assistance control unit 204, for example, transmits, to the work machine 40, the operation amounts of the travel operation device, slew operation device, boom operation device, arm operation device, bucket operation device, and the like, which are input to the remote operation mechanism 211 by operation of the operator OP, with a limitation (limitation on the maximum values of the operation amounts) imposed; and thereby causes the actuator that is running in the work machine 40 to automatically decelerate.

In addition, the assistance control unit 204 performs control to notify the operator of detected information on the moving body M irrespective of the level of the likelihood of causing interference with the remote operation performed by the operator. The notification control causes, for example, display of the detection of the moving body M on an image output device 221 of the remote output interface 220. At the same time as the display, display of information stored in the attribute database 250 may be performed and an alarm may be concomitantly caused to sound. In addition, a notification content may be changed according to the attribute and distance of the moving body M. The work machine 40 will be described hereinafter.

The remote output interface 220 comprises an image output device 221 and a remote radio communication apparatus 222 which are described hereinafter.

The image output device 221 is, as illustrated in Fig. 2 for example, provided on the remote operation device 20 and constituted by a front-right image output device 2211, a front image output device 2212, and a front-left image output device 2213 that are respectively arranged in front and to the right of, in front of, and in front and to the left of the seat St on which the operator OP sits. Each of the image output devices 2211 to 2213 may comprise a speaker (voice output device) (not illustrated).

The remote radio communication apparatus 222 has a function of allowing the work machine 40 and the remote operation device 20 to perform radio communication with each other by using a known technique in a state where communication between the work machine 40 and the remote operation device 20 is established.

The distance detection device 230 is only required to be a device that allows detection of a distance from the operator OP to the moving body M which is output from the distance detection device 230. For example, the distance detection device 230 is a Time of Flight (TOF) sensor. This example is merely one example and the distance detection device 230 may be a proximity sensor or may be a stereo camera.

In addition, the distance detection device 230 can appropriately set a detection area (detection distance, detection width) that is an area in which a distance from the distance detection device 230 to the moving body M is detected.

Furthermore, the distance detection device 230 is provided at a predetermined portion of the remote operation device 20. Only one distance detection device 230 may be provided for the remote operation device 20 or a plurality of distance detection devices 230 may be provided.

For example, the distance detection device 230 is such that the distance detection device 230 is arranged on the seat St and the orientation of the distance detection device 230 is toward the back of the operator OP. It detects a distance to a moving body M (suspicious person) approaching the operator OP from behind the operator OP seating on the seat St. The orientation of the distance detection device 230 is only required to be an orientation that allows a distance from the operator OP to the moving body M to be measured.

That is, the distance detection device 230 detects a distance from the operator OP to the moving body M with respect to the position of the seat St.

It should be noted that in a case where a distance from the operator OP to a wall surface of a remote operation chamber (not illustrated) where the remote operation device 20 is placed is short, the distance detection device 230 does not have to be oriented toward the wall surface.

For example, in a case where a distance from a backrest of the seat St to a wall surface that is in the right side of the seat St is 10 cm, a detection area of the distance detection device 230 is set with the right side of the operator excluded.

That is, in a case where a distance from the seat St to the wall surface is short and the moving body M cannot approach the operator OP from the right side of the operator OP, the distance detection device 230 excludes, in advance, an area on the right side of the operator OP from the detection area.

In other words, as for the moving body M approaching the operator OP from the right side of the operator OP, the distance detection device 230 does not detect a distance to the operator.

The remote operation image capturing device 240 has a function of capturing an image around the operator OP. Especially, it is preferable that the remote operation image capturing device 240 have a function of capturing an image behind and on the left and right sides of the operator OP. For example, when a suspicious person is approaching the operator from behind the operator OP, the remote operation image capturing device 240 captures an image of the suspicious person. In a case where the remote operation device 20 is placed within the remote operation chamber, the remote operation image capturing device 240 may be a monitor camera that continuously captures an image of a door of the remote operation chamber to monitor whether a suspicious person enters. The remote operation image capturing device 240 is not necessarily required to capture an image of the operator OP and for example, an area excluding the seat St is set as a detection area.

For example, the remote operation image capturing device 240 is a video camera and is placed above the image output device 221 to capture an image behind the operator OP. The remote operation image capturing device 240 may also be a zenith camera. In this case, the remote operation image capturing device 240 is placed on the ceiling of the remote operation chamber to capture a 360° image around the operator OP. The remote operation image capturing device 240 may also be a stereo camera. In this case, the remote operation image capturing device 240 can detect a distance from the operator OP to the moving body M (suspicious person) and therefore, can also function as the distance detection device 230.

The attribute database 250 is only required to be a storage device that has an ability to store a candidate as a moving body M and an attribute (information) of the moving body M. For example, the storage device is a hard disk drive (HDD). In addition, the storage device may be a portable storage medium such as an SD (registered trademark), a memory card (secure digital memory card), a compact flash (CF), a NAND flash, a flexible disk, an optical disk, a compact disk, a Blu-ray (registered trademark) disk, a digital versatile disk (DVD).

In addition, the attribute database 250 stores a table in which information on the activity level of a moving body and a danger index value of the moving body are associated with each other. In this table, a danger index for the activity level of each moving body is set in advance.

The attribute database 250 may also store a function for calculating a danger index value of a moving body based on information on the activity level of the moving body. An example of the function is a function that uses X as a master variable and Y as a dependent variable and outputs Y based on an input value of X. This function is merely one example of the function for determination.

The work machine 40 is, for example, a work machine that can operate at a construction site. The work machine 40 includes at least either a construction machine capable of dozing or excavating soil or a transport vehicle capable of transporting soil. The construction machine includes at least either a hydraulic shovel having a bucket or a bulldozer having a blade. The transport vehicle includes a dump track having a vessel, and the like. The construction machine may be a demolition machine, a crane, a wheel loader, a motor grader, or the like.

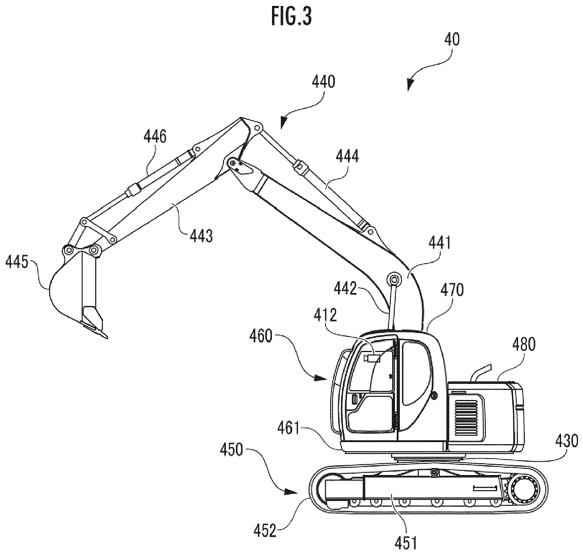

The work machine 40 comprises, as components, an actual machine control device 400, an actual machine input interface 410, an actual machine output interface 420, a slewing mechanism 430, an actuation mechanism (work attachment) 440, a lower travel body 450, an upper slewing body 460, a driving chamber 470, a machine chamber 480 (Fig. 3). It should be noted that all of those components are not needed depending on the necessity.

The actual machine control device 400 is constituted by an arithmetic processing device (single-core processor or a multi-core processor; or a processor core included therein); and reads necessary data and software from a storage device such as a memory and executes arithmetic processing for the data according to the software.

For example, the actual machine control device 400 performs the arithmetic processing and performs control of at least either stopping or decelerating the motion in the work machine 40 (traveling, slewing, derricking, gripping, crushing, cutting, absorbing, winding up, excavating, and the like).

The actual machine input interface 410 comprises an actual machine operation mechanism 411 and a worksite image capturing device 412.

The actual machine operation mechanism 411 comprises a plurality of actual machine operation levers (not illustrated) that are arranged in a similar manner to the one for the remote operation mechanism 211, around the driving chamber seat arranged inside the driving chamber 470. The driving chamber 470 is provided with a driving mechanism or a robot that receives a signal according to an operation manner of a remote operation lever and operates an actual machine operation lever (not illustrated) in response to the receipt of the signal. The driving chamber 470 will be described hereinafter.

The worksite image capturing device 412 is, for example, placed inside the driving chamber 470 and captures an image of an environment including at least part of the actuation mechanism 440 through a front window of the driving chamber 470.

The actual machine output interface 420 comprises an actual machine radio communication apparatus 421.

The actual machine radio communication apparatus 421 has a function of allowing the work machine 40 and the remote operation device 20 to perform radio communication with each other by using a known technique in a state where communication between the work machine 40 and the remote operation device 20 is established

The slewing mechanism 430 is arranged between a lower frame 451 of the lower travel body 450 and an upper frame 461 of the upper slewing body 460. The slewing mechanism 430 connects the upper frame 461 to the lower frame 451 so as to be slewable around a horizontal axis by using a slewing axis "a" as an axis.

A work attachment 440 as the actuation mechanism comprises: a boom 441 that is derrickably attached to the upper slewing body 460; an arm 443 that is pivotably connected to an tip of the boom 441; and a tip attachment 445 that is pivotably connected to a tip of the arm. For example, when the work machine 40 performs an excavation operation, the tip attachment 445 is a bucket. In addition, for example, when the work machine 40 performs a demolition operation, the tip attachment 445 is a crushing device. On the work attachment 440, the boom cylinder 442, an arm cylinder 444, and a tip cylinder 446 each constituted by an extendable hydraulic cylinder are attached.

The lower travel body 450 comprises: a lower frame 451; and a pair of crawlers 452 arranged on both sides of the lower frame 451. The crawler 452 is driven by a travel hydraulic motor (not illustrated) that is a hydraulic actuator.

It should be noted that the lower travel body 450 is not limited to a travel body constituted by the lower frame 451 and the crawler 452 but is only required to be one that can have the slewing mechanism 430 and the work attachment 440 mounted thereon and can travel. For example, the travel body may be a travel body that moves by wheels or may be a legged travel body. In addition, when the work machine is used on the water, the travel body may be a barge or the like.

The upper slewing body 460 comprises the upper frame 461 and on the upper frame 461, the work attachment 440, the driving chamber 470, and the machine chamber 480 are disposed.

The driving chamber 470 is provided with a driving mechanism or a robot that receives a signal according to an operation manner of a remote operation lever and operates an actual machine operation lever in response to the receipt of the signal. In addition, the driving chamber 470 may be provided with various apparatuses (e.g., an emergency stop switch and a monitor) for operating the work machine 40, such as actual machine operation levers (not illustrated) for a driver actually riding on the work machine 40 to operate: the motion of the work machine 40 (traveling, slewing, derricking, gripping, crushing, absorbing, winding up, excavating, etc.); the slewing of the upper slewing body 460; and the movement of the lower travel body 450.

In the machine chamber 480, an oil tank (not illustrated) and a hydraulic circuit device (not illustrated) is housed.

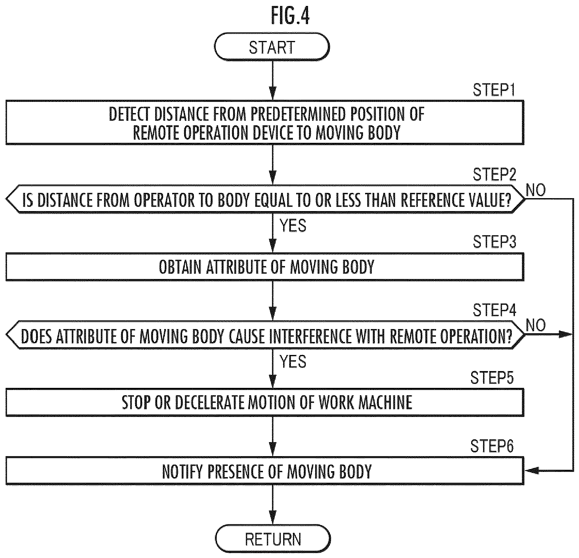

The function of the remote operation assistance system S having the configuration described above will be described with reference to a flowchart illustrated in Fig. 4.

At STEP1, the distance acquisition unit 201 obtains information on a distance from a predetermined position (e.g., the seat St on which an operator OP sits) to a moving body M (suspicious person).

At STEP2, it is determined whether the distance obtained at STEP 1 is equal to or less than a reference value.

At STEP3 (if determination at STEP 2 is YES), the attribute acquisition unit 202 obtains an attribute to which the moving body M belongs, from the attribute database 250. If determination at STEP 2 is NO, an advance to STEP 6 is made.

At STEP4, the interference determination unit 203 determines whether the attribute of the moving body M causes interference with the remote operation. More specifically, it calculates a danger threshold based on the distance obtained by the distance acquisition unit 201 and the attribute obtained by the attribute acquisition unit 202, and determines a level of the likelihood of the interference occurring.

At STEPS (if determination at STEP4 is YES), the assistance control unit 204 performs control to stop or decelerate the motion of the work machine 40. Especially if there is a high likelihood of the interference occurring, it makes the motion of the work machine 40 stop; or if there is a low but nonzero likelihood of the interference occurring, it makes the motion of the work machine 40 decelerate. In addition, if there is no likelihood of the interference occurring (if determination at STEP 2 is NO), an advance to STEP6 is made.

Lastly, at STEP6, control to notify the operator OP of the presence of the moving body M is performed. A part of the flowchart described above may be modified under a condition where the operator can receive assistance in the remote operation according to a determination result of the interference determination unit 203.

### (Other embodiments of the present invention)

In the above embodiment, description has been made about the example of determining a level of the likelihood of interference occurring with the remote operation, based on information on the distance obtained by the distance acquisition unit 201 and the attribute obtained by the attribute acquisition unit 202; however, the example is not limited thereto.

For example, control for assistance in the remote operation may also be performed by: firstly determining a level of the likelihood of interference occurring with the remote operation based on the distance detected by the distance acquisition unit 201; and after that, determining the magnitude of the likelihood of interference occurring with the remote operation based on the attribute obtained by the attribute acquisition unit 202. That is, there may be two or more determination units that determine a level of the likelihood of interference occurring with the remote operation. The remote operation assistance system according to the present invention can also be applied to such a case.

In the above embodiment, description has been made about the example of the attribute acquisition unit 202 obtaining the attribute of the moving body M from the attribute database 250, however the example is not limited thereto. For example, when the moving body M is a pet (dog, or the like), the attribute acquisition unit 202 may obtain the attribute of the moving body M in such a manner that a collar is worn on the pet neck, an identification for identifying the pet is attached to the collar, and the identification is read by a reader. For example, the attribute acquisition unit 202 may obtain the attribute of the moving body M in such a manner that the identification is a QR code (registered trademark), the QR code (registered trademark) is made to hold information for identifying the pet, and the QR code (registered trademark) is read by a code reader.

When a collar is worn on a pet neck, the attribute acquisition unit 202 may obtain the attribute of the pet in such a manner that an IC tag (RFID) is attached to the collar, the IC tag (RFID) is made to hold information for identifying the pet, and the IC tag is read by the IC tag reader (RFID reader).

Other examples of the identification include an IC code, a barcode, a matrix barcode, a data matrix code, a dedicated code, a triangle code, a number barcode, an alpha numeric barcode, a two-dimensional barcode, a symbol, a figure, a hand-written character, a character, a number, an alphanumeric character, a hieroglyph, a pictograph, a syllable notation character, a logographic character, and a set of combinations of them.

A device that reads the identification is a code reader, or the like. In addition, in directly reading characters or the like (pet name), a known technique (OCR or the like) may be used to read the characters (pet name).

In the above embodiment, description has been made about the example of the interference determination unit 203 in a case where the number of moving bodies M that are present is 1; however the example is not limited thereto.

For example, when a plurality of moving bodies M are present, the interference determination unit 203 determines the likelihood of causing interference for each moving body M.

In addition, for example, the danger threshold when a plurality of moving bodies M are present may be set to 10 in advance; and when information indicating that a plurality of moving bodies M are present is obtained, it may be determined that there is a high likelihood that each of the moving bodies M will interfere. Here, a distance between the operator OP and each of the plurality of moving bodies that are present does not matter.

More specifically, the interference determination unit 203 may determine, when obtaining information indicating that there are two pets (dogs) behind the operator OP, that there is a high likelihood that each of the dogs will interfere. Here, even when a distance between the operator OP and each dog is 10 meters, since two dogs are present behind the operator OP, it is determined that there is a high likelihood that each of the dogs will interfere with the remote operation performed by the operator OP.

In addition, for example, when no moving body M is present, the interference determination unit 203 does not need to determine the likelihood of causing interference. Here, since no moving body M is present, the danger threshold is 0 and it can be determined that there is no likelihood that the moving body M will interfere. In this case, the motion of the work machine is neither stopped nor decelerated.

In the above embodiment, description has been made about the example of the interference determination unit 203 in a case where the moving body M is an instructor of the operator OP and the instructor is present 1 meter behind the operator OP; however the example is not limited thereto.

Description will be made regarding a case in which the moving body M is a co-worker who is on bad terms with the operator OP and the co-worker is present 1 meter to the right of the operator OP. In this case, information indicating that a relationship between the operator OP and the co-worker is not favorable is stored in the attribute database 250 in advance. In addition, in the attribute database 250, both information indicating that the danger index value of the co-worker is 0 and information indicating that the danger index value of the co-worker when the operator OP is performing the remote operation is 5 are stored in advance.

In this case, since the distance from the operator OP to the moving body M, which is obtained by the distance acquisition unit 201, is 1 meter, the interference determination unit 203 determines that the danger index value is 5. In addition, the attribute acquisition unit 202 obtains information indicating that the danger index of the co-worker when the operator OP is performing the remote operation is 5. Then, the total danger index value is 10 and therefore, the interference determination unit 203 determines that there is a high likelihood that co-worker will interfere with the remote operation performed by the operator OP.

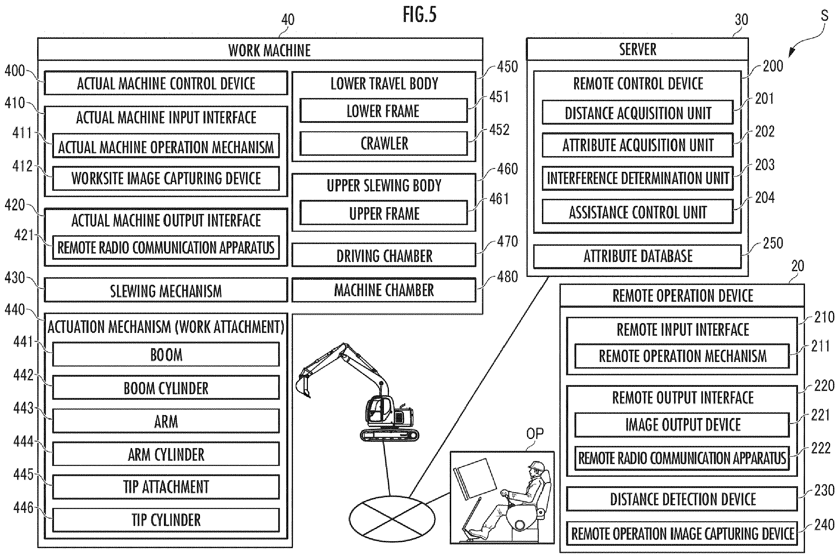

In the above embodiment, an example in which the remote control device 200 is included in the remote operation device 20 has been presented; however, the example is not limited thereto. For example, the remote control device 200 may be comprised in a server 30 by using cloud technology (Fig. 5). In this case, the remote operation device 20, the server 30, and the work machine 40 are connected via a network, enabling a remote operation via the network. In this case, the attribute database 250 may be comprised in the server 30 or may be comprised in the remote control device 200.

In the above embodiment, an example in which the remote control device 200 is included in the remote operation device 20 has been presented; however, the example is not limited thereto. For example, the remote control device 200 may be installed in the work machine 40 (not illustrated).

In the above embodiment, an example in which the attribute database 250 is included in the remote operation device 20 has been presented; however, the example is not limited thereto. For example, the attribute database 250 may be comprised in the server 30 by using cloud technology. In this case, the remote operation device 20, the server 30, and the work machine 40 are connected via a network, enabling a remote operation via the network. Alternatively, another server (not illustrated) that is different from the server 30 may comprise the attribute database 250.

In the above embodiment, an example in which the attribute database 250 is included in the remote operation device 20 has been presented; however, the example is not limited thereto. For example, the attribute database 250 may be installed in the work machine 40 (not illustrated).

In the present invention, it is preferable that when the interference determination unit determines that there is a high likelihood of interference occurring with the remote operation performed by the operator, the assistance control unit perform control to stop the motion of the work machine.

According to the present invention, when the interference determination unit determines that there is a high likelihood of interference occurring with the remote operation performed by the operator, the assistance control unit performs control to stop the motion of the work machine. This allows the motion of the work machine to be stopped before the operator suspends the remote operation.

When it is determined that there is a high likelihood of interference occurring with the remote operation, the motion of the work machine is surely stopped; and when it is determined otherwise, the motion of the work machine is continued and therefore, the operability of the operator can be ensured.

In the present invention, it is preferable that when the interference determination unit determines that there is a low likelihood of interference occurring with the remote operation performed by the operator, the assistance control unit perform control to decelerate the motion of the work machine.

According to the present invention, when the interference determination unit determines that there is a low likelihood of interference occurring with the remote operation performed by the operator, the assistance control unit performs control to decelerate the motion of the work machine. This deters the operator's operation from being more cautious than required, thereby allowing the workability to be prevented from being too deteriorated.

### Reference Signs List

S remote operation assistance system, 20 remote operation device, 30 server, 40 work machine, 200 remote control device, 201 distance acquisition unit, 202 attribute acquisition unit, 203 interference determination unit, 204 assistance control unit, 250 attribute database

## Claims

1. A remote operation assistance system (S) that is used for assisting in remote operation of a work machine (40) by an operator (OP) using a remote operation device (20), the remote operation assistance system (S) comprising:
a distance acquisition unit (201) arranged at a predetermined portion of the remote operation device (20) and configured to obtain information on a distance to a moving body;
an attribute acquisition unit (202) configured to obtain an attribute, the moving body belonging to the attribute;
an interference determination unit (203) configured to determine a level of a likelihood of interference occurring with the remote operation, based on the distance detected by the distance acquisition unit and the attribute obtained by the attribute acquisition unit; and
an assistance control unit (204) configured to perform control to assist in the remote operation in accordance with a result of the determination by the interference determination unit (203).

2. The remote operation assistance system (S) according to claim 1, wherein
when the interference determination (203) determines that there is a high likelihood of interference occurring with the remote operation performed by the operator (OP), the assistance control unit (204) performs control to stop motion of the work machine (40).

3. The remote operation assistance system (S) according to claim 1, wherein
when the interference determination unit (203) determines that there is a low likelihood of interference occurring with the remote operation performed by the operator (OP), the assistance control unit (204) performs control to decelerate motion of the work machine (40).

## Patentansprüche

1. Fernbetriebunterstützungssystem (S), das zur Unterstützung bei einem Fernbetrieb einer Arbeitsmaschine (40) durch einen Bediener (OP) unter Verwendung einer Fernbetriebsvorrichtung (20) verwendet wird, wobei das Fernbetriebunterstützungssystem (S) Folgendes umfasst:
eine Entfernungserfassungseinheit (201), die an einem vorbestimmten Abschnitt der Fernbetriebsvorrichtung (20) angeordnet und konfiguriert ist, Informationen über eine Entfernung zu einem sich bewegenden Körper zu erhalten;
eine Merkmalerfassungseinheit (202), die konfiguriert ist, ein Merkmal zu erhalten, wobei der sich bewegende Körper zu dem Merkmal gehört;
eine Störungsbestimmungseinheit (203), die konfiguriert ist, auf Grundlage der von der Entfernungserfassungseinheit ermittelten Entfernung und des von der Merkmalerfassungseinheit erhaltenen Merkmals ein Wahrscheinlichkeitsniveau einer Störung beim Fernbetrieb zu bestimmen; und
eine Unterstützungssteuereinheit (204), die konfiguriert ist, eine Steuerung zur Unterstützung des Fernbetriebs gemäß einem Ergebnis der Bestimmung durch die Störungsbestimmungseinheit (203) durchzuführen.

2. Fernbetriebunterstützungssystem (S) nach Anspruch 1, wobei, wenn die Störungsbestimmungseinheit (203) feststellt, dass eine hohe Wahrscheinlichkeit besteht, dass eine Störung bei dem von dem Bediener (OP) durchgeführten Fernbetrieb auftritt, die Unterstützungssteuereinheit (204) eine Steuerung durchführt, um die Bewegung der Arbeitsmaschine (40) anzuhalten.

3. Fernbetriebunterstützungssystem (S) nach Anspruch 1, wobei, wenn die Störungsbestimmungseinheit (203) feststellt, dass eine geringe Wahrscheinlichkeit besteht, dass eine Störung bei dem von dem Bediener (OP) durchgeführten Fernbetrieb auftritt, die Unterstützungssteuereinheit (204) eine Steuerung zum Verlangsamen der Bewegung der Arbeitsmaschine (40) durchführt.

## Revendications

1. Système d'aide à l'actionnement à distance (S) qui est utilisé pour aider à l'actionnement à distance d'une machine de travail (40) par un opérateur (OP) utilisant un dispositif d'actionnement à distance (20), le système d'aide à l'actionnement à distance (S) comprenant :
une unité d'acquisition de distance (201) disposée au niveau d'une section prédéterminée du dispositif d'actionnement à distance (20) et configurée pour obtenir des informations sur une distance par rapport à un corps en mouvement ;
une unité d'acquisition d'attribut (202) configurée pour obtenir un attribut, le corps en mouvement appartenant à l'attribut ;
une unité de détermination d'interférence (203) configurée pour déterminer un niveau d'une probabilité d'interférence se produisant avec l'actionnement à distance, en se basant sur la distance détectée par l'unité d'acquisition de distance et l'attribut obtenu par l'unité d'acquisition d'attribut ; et
une unité de commande d'aide (204) configurée pour réaliser une commande pour aider à l'opération à distance en fonction d'un résultat de la détermination par l'unité de détermination d'interférence (203).

2. Système d'aide à l'actionnement à distance (S) selon la revendication 1, dans lequel, lorsque l'unité de détermination d'interférence (203) détermine qu'il y a une haute probabilité d'interférence se produisant avec l'actionnement à distance réalisé par l'opérateur (OP), l'unité de commande d'aide (204) réalise la commande pour stopper le mouvement de la machine de travail (40).

3. Système d'aide à l'actionnement à distance (S) selon la revendication 1, dans lequel, lorsque l'unité de détermination d'interférence (203) détermine qu'il y a une faible probabilité d'interférence se produisant avec l'actionnement à distance réalisé par l'opérateur (OP), l'unité de commande d'aide (204) réalise la commande pour décélérer le mouvement de la machine de travail (40).
